# FASCICULE DE BREVET EUROPEEN

(11) **EP 3 003 016 B1**
(45) Date de publication et mention de la délivrance du brevet: **30.05.2018**
(21) Numéro de dépôt: 14744635.5
(22) Date de dépôt: 05.06.2014
(51) Int. Cl.: A01J 25/12, A01J 25/15

(54) **MACHINE ROTATIVE POUR FABRIQUER DES FROMAGES À PÂTE PRESSÉE**
ROTATIONSKÄSEPRESSE
ROTATIONAL CHEESEPRESS

(30) Priorité: 07.06.2013 CH 10792013
(43) Date de publication de la demande: 13.04.2016
(73) Titulaire: Romeco 2000 S.A., 1762 Givisiez (CH)
(72) Inventeur: EGGERTSWYLER, Marcel, CH-1762 Givisiez (CH)
(86) Numéro de dépôt international: PCT/IB2014/061977
(87) Numéro de publication internationale: WO 2014/195895

(56) Documents cités:
- WO-A2-2009/066168
- DE-A1- 2 656 659
- DE-B- 1 211 432

## Description

La présente invention concerne la fabrication de fromages à pâte pressée et a pour objet un dispositif perfectionné permettant de mettre le caillé en moules, de presser les fromages en enceinte normale ou climatisée, notamment les fromages en meule, puis de nettoyer en place la totalité de la machine.

Dans la fabrication industrielle des fromages, notamment des fromages à pâte dure, il est connu que l'on automatise les opérations de transfert du caillé dans une série de moules, que l'on place sous presse pour pressage et égouttage, puis on retire le fromage du moule pour poursuivre les opérations de maturation de chaque meule, notamment la mise en saumure. Le but d'automatiser ces opérations est de réduire leur durée et de permettre une économie de personnel.

De telles machines sont bien connues, construites de manière à pouvoir réutiliser pour des meules multiples un dispositif commun de remplissage ou de pressage, voir par exemple DE 12 11 432 B. Les accessoires ajoutés pour automatiser les machines manuelles de conception classique ont rendu ces machines de plus en plus volumineuses, coûteuses, de moins en moins aisées d'accès, et dont l'usage de moules de plusieurs dimensions est malaisé. Il avait donc été estimé nécessaire de développer pour de telles machines des accessoires complexes même pour remplacer des fonctions manuelles simples.

De plus, le nettoyage aux normes d'usage alimentaire de telles machines complexes, comportant bien souvent de nombreux recoins, requiert un temps considérable pour permettre aux réactifs de diffuser dans ces endroits difficiles, puis d'être rincés. Parfois même, certains de ces recoins restent inaccessibles au nettoyage.

Le but de l'invention est de proposer un dispositif compact plus économique et de haute productivité, qui permettent de remédier aux difficultés ci-dessus en réunissant, en une seule machine automatisée, une combinaison de solutions innovantes à ces multiples limitations, tout en offrant une interface homme-machine optimisée, permettant d'effectuer manuellement certaines opérations choisies.

Des développements profitables découlent des revendications indépendantes, qui offrent les choix de presser des fromages de différentes tailles entre 100 mm et 820 mm de diamètre sur la même machine en ne remplaçant aisément que le plateau qui supporte les moules, de presser simultanément ou successivement des fromages de dimensions différentes, et d'utiliser tous les types de moules disponibles sur le marché soit pressés par le fond, soit par le dessus, d'équiper la machine d'une seule, ou de deux ou trois faces de travail.

D'autres particularités et avantages de l'invention ressortiront de la description et des dessins ci-après, relatifs à un exemple non limitatif. Les dessins annexés se rapportent aux parties suivantes du dispositif :
- la figure 1 est une vue schématique en perspective d'un dispositif selon l'invention, en configuration de pressage ;
- la figure 2 est une vue en coupe du dispositif de la figure 1, sensiblement selon l'axe des vérins 18, en configuration de remplissage d'un des moules, avec la localisation de la zone d'intervention manuelle ;
- la figure 3 est une vue en coupe d'un détail de la figure 2 pour une unité de pressage, positionné selon les différentes configurations des phases de travail du dispositif ;
- la figure 4 est une vue schématique partielle en coupe et en plan de différentes configurations de la figure 3, correspondant à des meules de différentes tailles ;
- la figure 5 est une vue en coupe d'une unité de pressage, montrant différentes directions d'actuation ;
- la figure 6 est une vue schématique en coupe des composants mis en oeuvre pour le nettoyage.

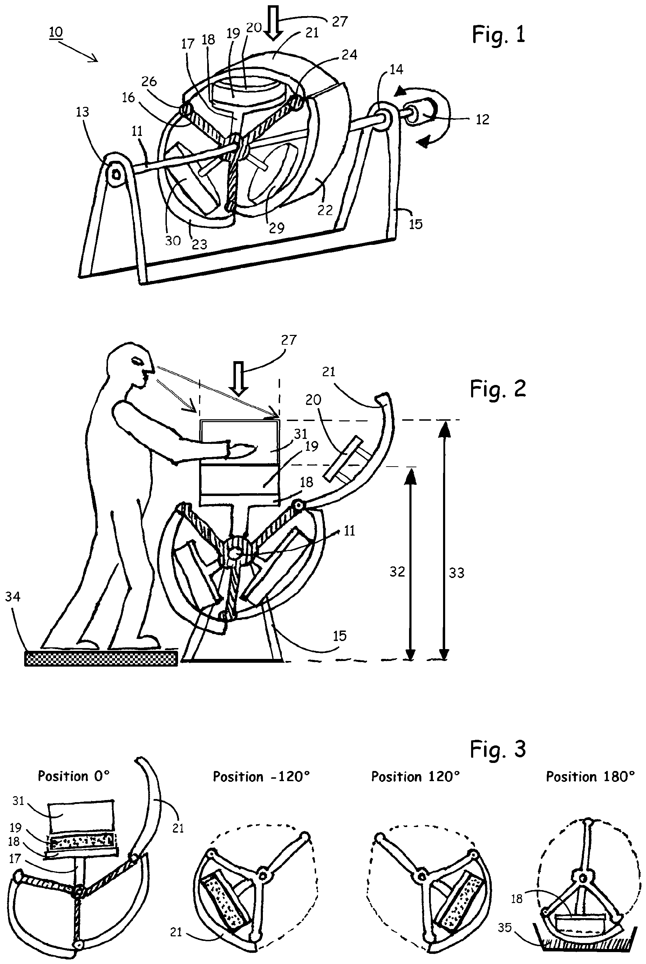

Dans l'exemple représenté à la Figure 1, le dispositif 10 de fabrication de meules de fromage pressées est dans un premier objet un dispositif rotatif à carrousel, le long d'un axe horizontal 11, qui est mis en rotation par un moteur 12. L'axe 11 est supporté par des paliers 13 et 14 érigés sur un châssis 15. Le dispositif se compose de plusieurs unités de pressage montées sur un noyau rigide 16 qui porte plusieurs vérins 17, surmontés chacun d'un plateau de piston 18, en contact avec un moule amovible 19, un profil ou un plateau de butée 20 solidaire d'un des segments 21 de la ceinture externe 21- 22- 23, articulée sur une charnière 24. Chaque segment de ceinture, ouvert lorsqu'il est en phase de remplissage du moule, est maintenu par un verrou en position fermée lorsqu'il est en phase de pressage. D'autres unités de pressage 29, 30 peuvent être montées à l'intérieur de la ceinture externe.

Comme le montre la Figure 2, en configuration de remplissage le segment de ceinture articulé 21 est en orientation ouverte, ce qui permet de couronner manuellement chaque moule 19 est d'une hausse de remplissage 31. La hauteur 32 du moule et la hauteur 33 de sa hausse peuvent être optimisées selon la taille de l'opérateur du dispositif, en réglant soit la hauteur du châssis 15, soit la hauteur du quai de travail 34 : le travail manuel et le contrôle visuel sont rendus tous deux confortables, à hauteur d'homme.

Le caillé est amené par une buse de remplissage 27 à proximité de la hausse 31, pendant le temps nécessaire pour remplir le moule : ce remplissage par du caillé de chaque moule et l'égouttage peuvent être confortablement contrôlés visuellement. Une fois l'égouttage terminé, la hausse est retirée manuellement et le moule rempli sans pression est en contact avec le plateau 18 du piston.
Le segment amovible articulé 21 composant la ceinture externe rigide, muni de profils ou d'un plateau de butée 20 est alors abaissé sur le moule et verrouillé en place.
La pression du plateau de piston 18 s'exerce alors contre le plateau de butée 20, par l'intermédiaire des meules de fromage à presser disposées sur les plateaux à l'intérieur des moules. Cette pression peut être aussi mise à profit pour démouler les meules une fois complètement pressées.

Dans un deuxième objet de l'invention, après le démoulage un efficace nettoyage en place automatique peut être avantageusement effectué en réutilisant la buse 27 pour gicler des réactifs qui peuvent être toxiques, permettant une aspersion des unités de pressage ainsi que des autres éléments ou une immersion des moules, conjointement avec des rideaux entourant tout le dispositif et isolant les opérateurs.

Un troisième objet de l'invention, illustré en Figure 2, est la possibilité d'utiliser des plateaux de pressage 18 et 20 d'un diamètre compris entre 100 mm et 820 mm, ceci sans compromettre un accès aisé d'un opérateur auprès de la machine, grâce à la disposition compacte de toutes les unités de pressage à l'intérieur de la ceinture externe 21-22-23.

Dans un quatrième objet, la machine de l'invention est caractérisée par une position de travail manuelle au-dessus du ou des moule(s) amovible(s) 19 seulement lorsque l'unité de pressage en travail est en position verticale à 0° et avec le segment articulé 21 de ceinture externe en position ouverte. L'opération de remplissage par la buse 27 s'effectue après la mise en place d'une hausse de remplissage 31. Comme illustré dans la Figure 2, cet ensemble bénéficie d'une visibilité complète de l'opérateur sur le moule 19 et la hausse de remplissage 31 du groupe de travail en cours, au besoin en réglant la hauteur du quai de travail 34 pour obtenir des hauteurs de travail manuel 32 et 33 optimales .
L'opération de démoulage de la meule de fromage assistée manuellement s'effectue de même en position verticale à 0° de l'unité de pressage par la poussée verticale hors des moules 19 au moyen du plateau de pressage 18 poussé par le vérin 17.
Dans cette position, les meules ne nécessitent pas d'être soulevées, mais d'être seulement :
- soit déposées manuellement de manière aisée sur une table de démoulage, sise 30 cm en contrebas.
- soit glissées sur une bande convoyeuse qui peut être munie au besoin d'un retourneur.

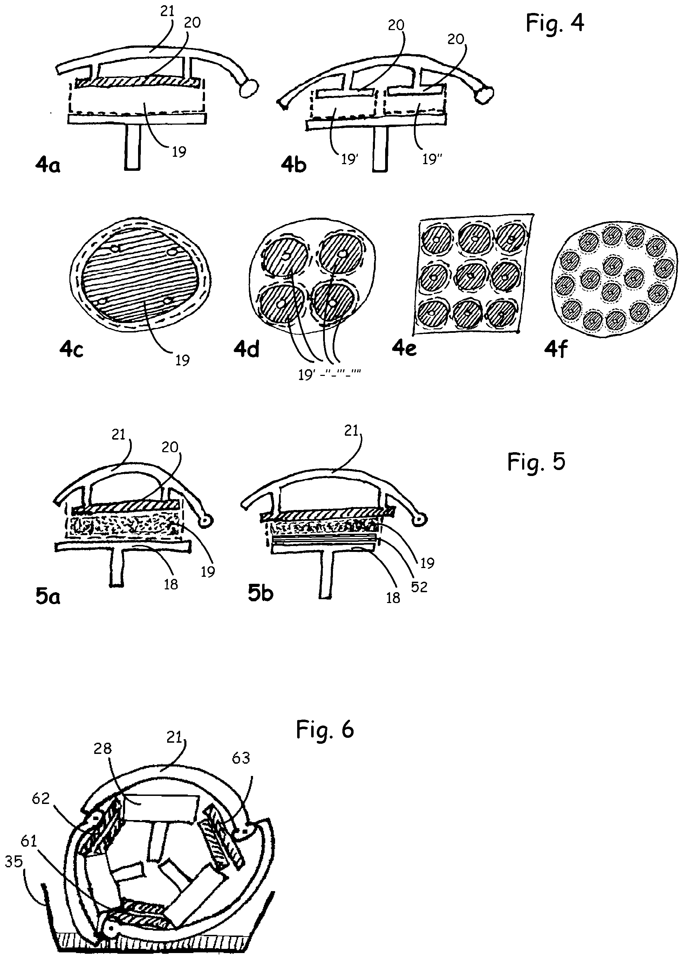

Dans un cinquième objet, la machine de l'invention est caractérisée par une taille de meules et de moules variable, obtenue simplement par sélection d'un segment articulé de ceinture externe amovible 21+20 correspondant à la taille des meules et des moules 19, comme illustré dans les Figures en coupe 4a et 4b.
Avec un ou plusieurs plateaux ou profils de butées 20 soit ronds, soit parallélépipédiques, montés sur le segment articulé de ceinture externe 21, on peut sélectionner la taille des meules de fromage, par exemple en substituant un seul moule de grande taille 4c par plusieurs moules de plus petite taille 4d, 4e ou 4f. La disposition de la figure 4f ou 4d est préférée à celle de la figure 4e car une répartition homogène du caillé dans les moules multiples y est plus favorable.
Dans le cas de profils de butée 20 comportant plusieurs moules, les fromages sont démoulés à la main mais cela n'engendre aucun problème car ces derniers sont de plus petite taille et leur poids se situe entre 1 et 8 kg.

Dans un sixième objet, la machine de l'invention est caractérisée par l'avantage d'utiliser alternativement des moules 19 avec ou sans fond dans lesquels se trouvent des tôles à fines perforations pour l'égouttage ou des moules polyéthylène, plastique ou autre micro-perforés. Pour chacun de ces moules, le couvercle est mobile.

Les moules libres 19 illustrés en Figure 5a sont centrés sur un plateau récepteur aligné sur un plateau de piston 18. Ils subissent un pressage par le haut exercé par le plateau de butée profilé 20, avec déplacement de la masse caillée de haut en bas dans le moule.

Les moules 19 illustrés en Figure 5b subissent par l'intermédiaire du foncet intérieur 52 un pressage par le bas avec déplacement de la masse de caillé de bas en haut dans le moule. L'extraction du fromage hors de ces moules 19 solidaires du châssis de la presse 16 s'effectue par la poussée verticale du fromage par l'intermédiaire du plateau de piston 18.

Dans un septième objet, la machine de l'invention est caractérisée par un espace non confiné dans la position de remplissage à 0 degré d'angle illustrée dans la figure 3 Position 0°, ce qui offre l'avantage de l'équiper aussi avec des moules à contrôle de l'immersion des grains.

Dans un huitième objet, un ou plusieurs plans de travail de la machine de l'invention peuvent être équipés de moules-cassettes. Ces derniers se glissent et se verrouillent sur le châssis 16 pour la mise en moule, l'égouttage du caillé et un éventuel pré-pressage du fromage. Ces moules 19 sont ensuite, tel une cassette, extraits du châssis 16 par simple glissement pour être repris par un convoyeur qui ira le placer sur un plan de pressage annexe, sis en bout de presse ou en face du plan de travail.
L'utilisation de moules-cassettes permettrait ainsi d'effectuer la mise en moules de plusieurs dizaines de charges journalières.

Dans un neuvième objet, illustré en Figure 6, la machine de l'invention est caractérisée par un rangement à portée de main entre les groupes de pressage des tôles à fines perforations 61, 62, 63 mises en oeuvre dans les moules pour l'égouttage et, en phase de nettoyage CIP, par une exposition optimale de ces pièces à fort encrassage au contact direct de l'aspersion des buses.
Lors du nettoyage et de l'aspersion de ces pièces, ces dernières sont glissées dans les espaces situés à : 60° ; - 60° ; 180°, disposés entre chacun des groupes de pressage 28 - La fermeture et le verrouillage des segments externes articulé 21 - maintient les pièces à l'intérieur de la ceinture externe. La position de rangement et de nettoyage étant la même, cela ne nécessite donc aucune opération humaine supplémentaire après nettoyage et présente ainsi rationalisation et hygiène optimales.

Dans un dixième objet, le dispositif de l'invention est caractérisé par trois positions de travail (face 1, face 2, face 3) disposées pour chacune des trois unités de pressage 28, 29, 30 successivement par rotation autour de l'axe horizontal 11 selon les angles suivants (mesurés à partir de 0° pour la position axe vertical): 0°, -120° et 120°.
Les opérations, illustrées particulièrement par l'exemple en Figure 3, sont effectuées successivement aux angles de rotation suivants :
a) 0° = remplissage du caillé dans le moule 19, sa sédimentation et drainage du petit-lait, suppression de la hausse de remplissage 31, puis fermeture du moule par le profil ou le(s) plateau(x) fixés sur le segment articulé de la ceinture externe 21 ; b) -120° = pressage avec retournement sur le flanc gauche accompagné par l'égouttage du petit-lait ; c) 120° = pressage avec retournement sur le flanc droit accompagné par l'égouttage du petit-lait ;.
d) 0° = ouverture du segment articulé de ceinture externe 21 et démoulage manuel ou par vérin 17 et piston 18 du fromage ; e) 180° = nettoyage en place « CIP » du dos du piston 18 sur un bac 35 de réception de l'agent de nettoyage.
Les deux autres unités de pressage 29 et 30 passent successivement par les mêmes étapes avec un décalage de 120° tout en permettant de poursuivre le pressage des meules de fromage déjà en cours de travail, ce qui offre l'avantage d'une productivité particulièrement élevée.

Enfin, le dispositif selon l'invention n'est pas limité aux avantages des exemples présentés précédemment, mais offre aussi des avantages additionnels par une combinaison de plusieurs des différents objets exposés et une mise en oeuvre selon d'autres modes opératoires déjà usuellement connus.

## Revendications

1. Dispositif (10) pour le pressage du fromage comprenant des moyens permettant un accès ergonomique à hauteur d'homme et une bonne visibilité vers les meules en cours de production, ainsi que pour le démoulage à hauteur d'homme également, sans convoyeur ou unité de démoulage complémentaire au dispositif de pressage, comprenant un axe horizontal (11) portant un noyau central rigide rotatif (16) muni de vérins (17) pour pressage et démoulage portant un plateau de piston (18) et des moules amovibles (19), et une buse de remplissage (27), **caractérisé par** une ceinture externe rigide (21,22,23) avec des segments amovibles articulés munis d'un profil ou d'un plateau de butée (20) contre lequel s'exerce la pression de ce piston (18), par l'intermédiaire des meules de fromage à presser disposées à l'intérieur de moules (19) sur les plateaux (18).

2. Dispositif selon la revendication 1, **caractérisé en ce que** la buse de remplissage est réutilisée pour un efficace nettoyage en place CIP automatique, permettant une immersion alternée de groupes de moules et une aspersion des autres éléments, conjointement avec des rideaux entourant tout le dispositif.

3. Dispositif selon la revendication 1, **caractérisé par** une dimension des plateaux (18) et (20) pour le pressage de meules de fromage d'un diamètre de 100 mm à 820 mm, tout en permettant de loger la totalité des équipements de pressage constitués par les vérins, les plateaux et les moules à l'intérieur d'une ceinture externe de la presse formée de segments amovibles articulés dont les dimensions réduites permettent à l'opérateur de se tenir ou de manoeuvrer de manière aisée à sa proximité.

4. Dispositif selon la revendication 1, **caractérisé par** un remplissage assisté manuellement en position verticale à 0 degré d'angle par une buse de remplissage du moule surmonté d'une hausse de remplissage, et un démoulage assisté manuellement, tous deux rendus possibles par l'usage en position ouverte d'un segment amovible articulé de la ceinture extérieure du dispositif.

5. Dispositif selon la revendication 1, **caractérisé en ce qu'**avec un plateau de piston identique on peut presser des meules de fromage de taille et nombre variés en sélectionnant un segment amovible articulé muni d'un profil de butée ajusté à la taille des meules et des moules, pour lequel les profils de butée comportant une distribution symétrique autour de l'axe du profil sont préférés.

6. Dispositif selon la revendication 1, **caractérisé par** le choix possible entre deux modes de pressage dans des moules à fines perforations d'égouttage, soit un pressage par le haut par un plateau de butée profilé, qui s'enfonce dans chaque moule libre, soit par le bas par un plateau de piston recouvert d'un foncet d'un diamètre légèrement inférieur à celui du moule, qui est solidaire du châssis de la presse et permet aussi en fin de pressage l'extraction du fromage hors moule par le plateau de piston.

7. Dispositif selon la revendication 1, **caractérisé par** un espace non confiné dans la position de remplissage à 0 degré d'angle, offrant la possibilité d'équiper le dispositif avec des moules à contrôle de l'immersion des grains.

8. Dispositif selon la revendication 1, **caractérisé en ce que** les moules sont constitués par des moules-cassettes verrouillées solidairement au châssis, qui après remplissage et pressage peuvent être glissés manuellement sur un convoyeur effectuant une mise en place dans un dispositif de pressage annexe

9. Dispositif selon la revendication 1, **caractérisé en ce que** les tôles à fines perforations sont entreposées à 60° ; - 60° ; 180°, entre les unités de pressage et verrouillées en place par la ceinture externe lors du nettoyage CIP.

10. Dispositif selon la revendication 1, **caractérisé par** trois positions successives de travail obtenues par rotation de trois unités de pressage, autour de l'axe horizontal (11) selon les angles de: 0°, 120° et -120°, qui permet d'égoutter et de presser les meules déjà moulées pendant le remplissage d'une nouvelle unité de pressage.

## Patentansprüche

1. Vorrichtung (10) zum Pressen des Käses mit Mitteln zum ergonomischen Zugang bei menschlicher Höhe und guter Sicht auf die Käseleiben während der Produktion, sowie eine Entformbarkeit auch bei menschlicher Höhe, ohne eine zu der Pressvorrichtung komplementäre Förder-oder Abstreifeinheit mit einer horizontalen Achse (11), die eine rotierende starre zentrale Nabe (16) trägt, die mit Stellantrieben (17) versehen ist zum Pressen und Entformen, Tragen einer Kolbenplatte (18), herausnehmbaren Formen (19) und einer Düse (27), **gekennzeichnet durch** einen starren Gurt (21, 22, 23) mit umklappbaren Gürtelgelenksegmente, mit einem Anschlagprofil (20) verzahnt, gegen die der Druck des Stellantriebes (17) ausgeübt wird, mittels der zu verpressenden Käseleiben an den Kolbenplatten (18) angeordnet sind.

2. Vorrichtung nach Anspruch 1, **dadurch gekennzeichnet, dass** die Fülldüse für eine effiziente automatische Reinigung wiederverwendet wird, zum abwechselnden Eintauchen von Gruppen von Formen und Besprühen der anderen Elemente mit Vorhängen, die die gesamte Vorrichtung umgeben.

3. Vorrichtung nach Anspruch 1, **gekennzeichnet durch** eine Größe der Kolbenplatte (18) und des Anschlagprofils (20) zum Andrücken von Käseleiben mit einem Durchmesser von 100 mm bis 820 mm, wobei alle gebildeten Presseinrichtungen (aufzunehmenden Formen, Stellantrieben , Kolbenplatten und Anschlagprofile) mit verringerten Abmessungen innerhalb dem Gurt der Presse eingeschlossen sind, so daß den Bediener in seiner Nähe leicht halten bzw. manövrieren lassen.

4. Vorrichtung nach Anspruch 1 für eine manuell unterstützte Befüllung der Form in vertikaler Position bei 0°, **gekennzeichnet durch** ein Anordnung, wobei während der Füllung die Form mit einem Füllsteigrohr (31) versehen ist und von einem Düse überragt wird, dann nach völler Füllung eine manuell unterstützte Entfernung der Füllsteigrohrs und eine Entformung aufweist, die beide durch den Einsatz in der Offenstellung von ein umklappbarer Gürtelgelenksegment der Vorrichtung.

5. Die Vorrichtung nach Anspruch 1, **dadurch gekennzeichnet, dass** bei gleicher Kolbenplatte, unterschiedliche Größe und Anzahl von Käseleiben können durch Auswahl eines Gürtelgelenksegment mit einem Anschlagprofil (20) versehenen, das auf die Größe der Käseleiben und der Formen abgestimmt werden, wobei Anschlagprofile mit einer symmetrischen Verteilung um die Achse des Profils bevorzugt sind.

6. Vorrichtung nach Anspruch 1, **gekennzeichnet durch** die mögliche Wahl zwischen zwei Pressmoden für Dünnlochtropfformen, entweder von oben durch ein Anschlagprofil (20) gedrückt wird, die in jede freie Form gedrückt wird, oder von unten durch eine Kolbenplatte (18), die mit einer Bodenabdeckung (52) mit einem Durchmesser abgedeckt ist, der geringfügig kleiner ist als derjenige der Form (19), der mit der starren Nabe (16)der Presse angeordnet ist und auch das Herausziehen des Käses aus der Form durch die Kolbenplatte am Ende des Pressens ermöglicht.

7. Vorrichtung nach Anspruch 1, **gekennzeichnet durch** einen unbegrenzten Raum in der Füllposition mit 0° Grad Winkel, das bereitstellen der Möglichkeit, die Vorrichtung mit Formen mit Kontrolle des Eintauchens der Körner auszustatten.

8. Vorrichtung nach Anspruch 1, **dadurch gekennzeichnet, dass** die Formen Einstückig durch mit dem Rahmen verriegelte Kassettenformen gebildet sind, die nach dem Befüllen und Pressen manuell auf eine Fördereinrichtung aufschiebbar sind, die eine Anordnung an einer Hilfspresseinrichtung durchführt

9. Vorrichtung nach Anspruch 1, **dadurch gekennzeichnet, dass** das Blech mit dünnen Perforationen bei 60°, -60° und 180° zwischen den Presseinheiten gelagert ist, und während der Reinigung durch den Gurt arretiert wird.

10. Vorrichtung nach Anspruch 1, **gekennzeichnet durch** drei aufeinanderfolgende Arbeitspositionen, die durch Drehen von drei Presseinheiten um die horizontale Achse (11) erhalten werden unter Winkeln von 0°, 120° und -120°, zum Entleeren und Pressen der bereits geformten Käseleiben während des Befüllens einer neuen Presseinheit.

## Claims

1. Device (10) for pressing the cheese comprising means for ergonomic access at human height and good visibility to the cheese wheels during production, as well as demolding also at human height, without a conveyor or stripping unit complementary to the pressing device, comprising a horizontal axis (11) carrying a rotating rigid central hub (16) provided with actuators (17) for pressing and demolding, carrying a piston plate (18), removable moulds (19), and a filling nozzle (27), **characterised by** a rigid outer belt (21,22,23) with hinged removable segments provided with an abutment profile (20) against which the pressure of said actuator (17) is exerted, by means of the cheese wheels to be pressed, arranged inside moulds (19) on the piston plates (18).

2. Device according to claim 1, **characterised in that** the filling nozzle is reused for efficient automatic Cleaning-In-Place, for alternately dipping groups of moulds and spraying the other elements together with curtains surrounding the whole device.

3. Device according to claim 1, **characterised by** a size of the piston plate (18) and abutment profile (20) for pressing cheese wheels with a diameter of 100 mm to 820 mm, while allowing all of the pressing equipment formed by the actuators, the piston plates and the moulds to be accommodated within an outer belt of the press formed of hinged removable segments of reduced dimensions allow the operator to easily hold or maneuver in its proximity.

4. Device according to claim 1, **characterised by** manually assisted filling in vertical position to 0 degree of angle by a filling nozzle of the mould surmounted by a filling riser (31), and manually assisted demolding, both made possible by use in the open position of a hinged removable segment of the outer belt of the device.

5. The device according to claim 1, **characterised in that**, with an identical piston plate, different size and number of cheese wheels can be pressed by selecting an articulated removable segment provided with an abutment profile (20) adjusted to the size of the cheese wheels and the moulds, in which the abutment profiles having a symmetrical distribution about the axis of the profile are preferred.

6. Device according to claim 1, **characterised by** the possible choice between two pressing modes for thin-hole drip moulds, either pressed from above by an abutment profile (20), which is pressed into each free mould, or from below by a piston plate (18) covered with a base cover (52) of a diameter slightly smaller than that of the mould (19), which is interlocked with the rigid hub (16) of the press and also allows the extraction of the cheese out of the mould by the piston plate at the end of pressing.

7. Device according to claim 1, **characterized by** an unconfined space in the filling position at 0 degree of angle, providing the possibility of equipping the device with moulds with control of the immersion of the grains.

8. Device according to claim 1, **characterised in that** the moulds are constituted by cassette moulds locked integrally with the frame, which after filling and pressing can be manually slid onto a conveyor performing a placement to an auxiliary pressing device

9. Device according to claim 1, **characterised in that** the sheet metal with thin perforations are stored at 60°; -60°; 180°, between the pressing units and locked in place by the outer belt during Cleaning-In-Place.

10. Device according to claim 1, **characterised by** three successive working positions obtained by rotating three pressing units, about the horizontal axis (11) at angles of 0°, 120° and -120°, for draining and pressing the already moulded cheese wheels during filling of a new pressing unit.
